# EUROPÄISCHE PATENTSCHRIFT

(11) **EP 2 582 442 B1**
(45) Veröffentlichungstag und Bekanntmachung des Hinweises auf die Patenterteilung: **28.09.2016**
(21) Anmeldenummer: 11726397.0
(22) Anmeldetag: 14.06.2011
(51) Int. Cl.: B01D 46/24, B01D 46/48, B01D 46/52, B01D 46/00, F02M 35/024, F02M 35/02

(54) **FILTERANORDNUNG, INSBESONDERE LUFTFILTERANORDNUNG**
FILTER ARRANGEMENT, IN PARTICULAR AIR FILTER ARRANGEMENT
ENSEMBLE FILTRE, NOTAMMENT ENSEMBLE FILTRE À AIR

(30) Priorität: 16.06.2010 DE 102010023974
(43) Veröffentlichungstag der Anmeldung: 24.04.2013
(73) Patentinhaber: Mahle International GmbH, 70376 Stuttgart (DE)
(72) Erfinder: GENSLER, Harry, 71229 Leonberg (DE); ROTHER, Thilo, 70372 Stuttgart (DE); SUTSCHITSCH, Hannes, A-9141 Eberndorf (AT); TRAUB, Matthias, 71034 Böblingen (DE); VON MERKATZ, Hendrik, 71686 Remseck (DE); WAIBEL, Hans, 71686 Remseck Aldingen (DE)
(74) Vertreter: BRP Renaud & Partner mbB Rechtsanwälte Patentanwälte Steuerberater
(86) Internationale Anmeldenummer: PCT/EP2011/059780
(87) Internationale Veröffentlichungsnummer: WO 2011/157680

(56) Entgegenhaltungen:
- DE-A1- 10 328 002
- DE-A1- 19 638 791
- US-A- 5 277 157

## Beschreibung

Die Erfindung bezieht sich auf eine Filteranordnung, insbesondere eine Luftfilteranordnung, mit einem einen Rohraumeingang und einen Reinraumausgang aufweisenden Gehäuse und ein im Gehäuse am Reinraumausgang anbringbaren Filtereinsatz, dessen Filterwand einen Reinraum im Innenraum des Filtereinsatzes von einem Rohraum im Innenraum des Gehäuses außerhalb des Filtereinsatzes trennt.

Das Dokument DE 10328002 offenbart eine derartige Filteranordnung

Derartige Luftfilteranordnungen werden serienmäßig für verschiedenartige Verbrennungsmotoren eingesetzt. Da der Rohraum außerhalb des Filtereinsatzes im Gehäuse untergebracht ist, lässt sich bei einer Inspektion leicht erkennen, ob der Filtereinsatz ausgetauscht werden muss. Allerdings besteht das Problem, dass bei einem unachtsamen Austausch des Filtereinsatzes ein Teil der im Innenraum des Gehäuses aufgenommenen Verschmutzungen in den Reinraumausgang gelangen kann. Deshalb ist es Aufgabe der Erfindung, eine Filteranordnung zu schaffen, bei der ein Wechsel des Filtereinsatzes ohne Verfrachtung von Schmutzpartikeln in den Reinraumausgang erfolgen kann.

Diese Aufgabe wird erfindungsgemäß dadurch gelöst, dass am Filtereinsatz ein Auskleidungsteil für einen Bereich des Innenraums des Gehäuses in der Nähe des Reinraumausgangs angeordnet ist.

Die Erfindung beruht auf dem allgemeinen Gedanken, am Filtereinsatz einen Auffangraum für den von der Filterwand nahe des Reinraumausgangs zurückerhaltenen Schmutz zu schaffen. Beim Austausch des Filtereinsatzes werden damit alle Schmutzansammlungen in der Nähe des Reinraumausgangs zwangsläufig entfernt, so dass ein Einrieseln von Verschmutzungen in den Reinraumausgang sicher verhindert wird.

Gemäß einer konstruktiv bevorzugten Ausführungsform der Erfindung kann zumindest eines der folgenden Merkmale vorgesehen sein: Der Filtereinsatz weist zwei Bodenscheiben auf, zwischen deren Randzonen die Filterwand angeordnet ist. Eine die Filterwand durchsetzende Öffnung ist mit dem Reinraumausgang verbindbar bzw. in Gebrauchslage des Filtereinsatzes mit dem Reinraumausgang verbunden. Das Gehäuse weist (bei eingesetztem Filtereinsatz) den Bodenscheiben eng benachbarte, über die Ränder der Bodenscheiben hinausragende Stirnwände auf. Die Stirnwände sind durch eine von der Filterwand beabstandete Umfangswand miteinander verbunden. Als Auskleidungsstück ist an den Bodenscheiben eine Schublade angeordnet oder anbringbar. Die Schublade weist ein der Öffnung in der Filterwand benachbartes geschlossenes Ende und ein davon entferntes offenes Ende sowie sich in Gebrauchslage des Filtereinsatzes an die Innenseiten der Stirnwände und der Umfangswand anschmiegende Wandungen auf.

Desweiteren kann zweckmäßig vorgesehen sein, dass miteinander zusammenwirkende Schiebeführungen an den Bodenscheiben sowie den zugewandten Innenseiten der Stirnwände vorgesehen sind, so dass der Filtereinsatz beim Austausch auf exakt vorgegebenen und reproduzierbaren Bahnen bewegt wird.

Die die Filterwand des Filtereinsatzes durchsetzende Öffnung ist vorzugsweise an einer die Bodenscheiben verbindenden Flanschplatte angeordnet. Dadurch wird eine sichere Verbindung der Öffnung mit dem Reinraumausgang erleichtert. Außerdem kann vorgesehen sein, dass die Schublade an der vorgenannten Flanschplatte verrastbar bzw. arretierbar ist. Hierbei wird die Schublade mit der Flanschplatte insbesondere schwenkbar verbunden. Diese Schwenkverbindung kann z.B. durch einen Lagerdorn und eine oder mehrere darauf aufklipsbare Lagerschalen erzeugt sein. Der Lagerdorn kann entweder an der Flanschplatte oder an der Schublade angeordnet sein. Die Lagerschale ist dann an dem korrespondierenden Bauteil, also der Schublade bzw. der Flanschplatte angeordnet.

Weiterhin kann die Schublade über eine Befestigungsvorrichtung verfügen, die an einem Bereich, beabstandet zu der Verbindung mit der Flanschplatte angeordnet ist. Diese Befestigungsvorrichtung kann mit einer oder mit beiden Bodenscheiben derart zusammenwirken, dass eine lösbare oder unlösbare Verbindung gebildet ist. Unter einer unlösbaren Verbindung ist eine Verbindung zu verstehen, die nicht ohne Beschädigung eines Fügepartners gelöst werden kann. Im Gegensatz dazu ist eine lösbare Verbindung, eine Verbindung, die ohne Beschädigung der Fügepartner gelöst und wieder hergestellt werden kann. Vorzugsweise ist die Verbindung zwischen Schublade und Bodenscheibe als lösbare Rast- oder Schnappverbindung ausgeführt. Die Verbindung zwischen der Schublade und der Bodenscheibe wird nach dem Befestigen der Schublade an der Flanschplatte durch eine Schwenkbewegung erzeugt. Somit ist die Schublade an mindestens zwei Stellen mit dem Filtereinsatz verbunden.

Bei einer alternativen Ausgestaltung ist die Schublade unlösbar durch z.B. Verkleben oder Verschweißen mit dem Filtereinsatz verbunden. Hierzu kann die Schublade zumindest an einem Teil, z.B. einer oder beiden Bodenscheiben und/oder der Flanschplatte, befestigt sein.

Im Übrigen wird hinsichtlich bevorzugter Merkmale der Erfindung auf die Ansprüche und die nachfolgende Erläuterung der Zeichnung verwiesen, anhand der eine bevorzugte Ausführungsform der Erfindung näher beschrieben wird.

Schutz wird nicht nur für angegebene oder dargestellte Merkmalskombinationen sondern auch für prinzipiell beliebige Kombinationen der angegebenen oder dargestellten Einzelmerkmale beansprucht. In der Zeichnung zeigt
- Fig. 1: eine teilweise geschnittene Seitenansicht einer erfindungsgemäßen Luftfilteranordnung,

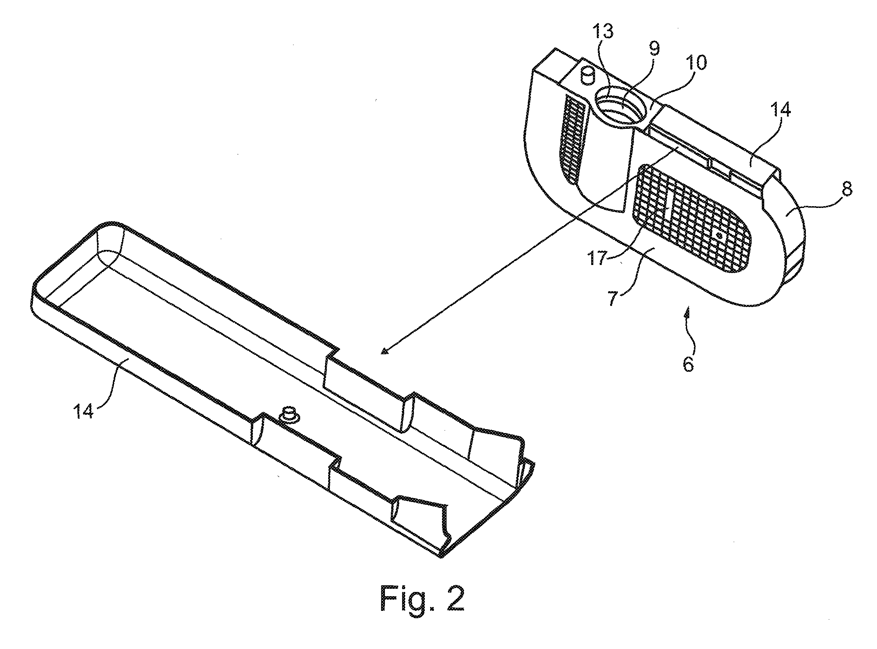

- Fig. 2: eine perspektivische Ansicht des Filtereinsatzes.

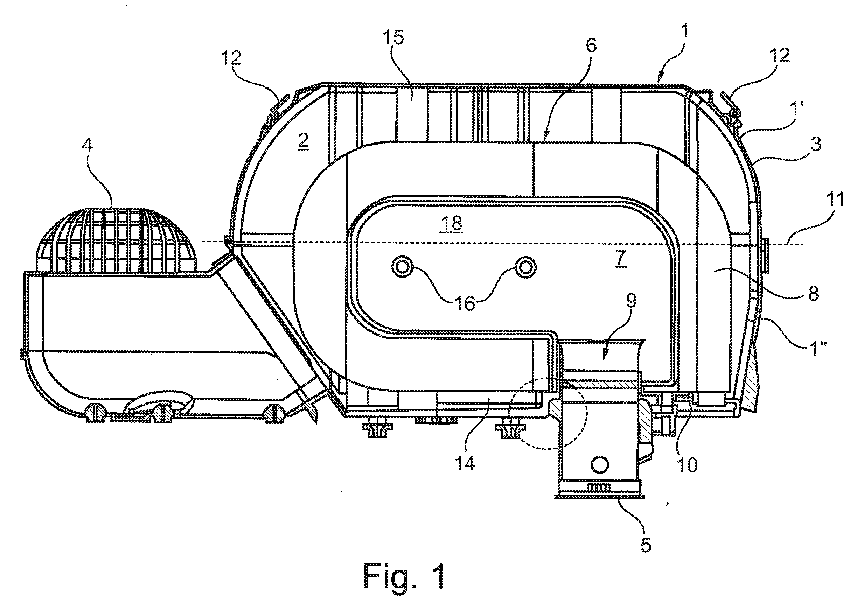

Gemäß Fig. 1 besitzt die dort dargestellte Luftfilteranordnung ein Gehäuse 1 mit zur Zeichnungsebene im Wesentlichen parallelen Stirnwänden 2 und einer die Stirnwände 2 verbindenden Umfangswand 3. An der Umfangswand sind ein Rohraumeingang 4 und ein Reinraumausgang 5 angeordnet.

Innerhalb des Gehäuses 1 befindet sich ein Filtereinsatz 6 mit zwei den Innenseiten der Stirnwände 2 des Gehäuses 1 benachbarten Bodenscheiben 7 und einer zu den Bodenscheiben 7 im Wesentlichen orthogonalen Filterwand 8, die in der Regel durch eine plissierte Wand aus Filtermaterial gebildet ist, wobei die Plisseefalten und -falze im Wesentlichen orthogonal zu den Bodenscheiben 7 ausgerichtet sind. Die Filterwand 8 ist an einander gegenüberliegenden Randzonen der Bodenscheiben 7 dicht mit den Bodenscheiben 7 verbunden. Die Filterwand 8 wird von einer Öffnung 9 durchsetzt, die im montierten Zustand des Filtereinsatzes 6 mit dem Reinraumausgang 5 verbunden ist, so dass der Innenraum des Filtereinsatzes 6 den Reinraum 18 bildet und der innerhalb des Gehäuses 1 außerhalb der Filterwand 8 verbleibende Abstandsraum den Rohraum 15 darstellt. Die Öffnung 9 ist in einer Flanschplatte 10 angeordnet, die mit den Bodenscheiben 7 dicht verbunden ist, wobei diese Verbindung über miteinander zusammenwirkende Formschlusselemente an der Flanschplatte 10 und den Bodenscheiben 7 sowie über eine durch Klebstoffraupen oder dergleichen erzeugte Abdichtung hergestellt sein kann. Im Übrigen ist die Flanschplatte 10 dicht mit der Filterwand 8 verbunden.

Um den Filtereinsatz 6 in das Gehäuse 1 einsetzen zu können, ist das Gehäuse 1 an einer zu seinen Stirnwänden 2 etwa senkrechten Trennebene 11 teilbar.

Wenn das Gehäuse 1 geöffnet wird, das heißt, wenn der in Fig. 1 obere Gehäuseteil 1' nach Öffnen von Spanhebeln 12 vom anderen Gehäuseteil 1" entfernt worden ist, lässt sich der Filtereinsatz 6 nach Art einer Schublade aus dem unteren Gehäuseteil 1" herausziehen bzw. in den unteren Gehäuseteil 1" einschieben, wobei eine Dichtung 13 am Innenrand der Öffnung 9 des Filtereinsatzes 6 dichtend auf den Außenumfang eines den Reinraumausgang 5 bildenden Rohrstutzens im Innenraum des unteren Gehäuseteils geschoben bzw. von diesem Rohrstutzen getrennt wird. Zur Erleichterung des Wechsels des Filtereinsatzes 6 sind auf den Außenseiten der Bodenscheiben 7 sowie den zugewandten Innenseite der Stirnwände 2 des Gehäuses miteinander zusammenwirkende Führungsprofile 17 angeordnet. Diese können derart ausgebildet sein, dass die Bodenscheiben 7 des Filtereinsatzes 6 und die Stirnwände 2 des Gehäuses 1 auch senkrecht zu den Wandebenen miteinander formschlüssig gekoppelt sind.

Im Übrigen können die Bodenscheiben 7 des Filtereinsatzes innerhalb des von der Filterwand 8 umschlossenen Innenraums miteinander durch säulenartige Stützen 16 verbunden sein, so dass der Filtereinsatz 6 ein stabiles Einschubteil bildet.

Erfindungsgemäß ist am Filtereinsatz 6 eine Schublade 14 angeordnet, die im in das Gehäuse 1 eingesetzten Zustand des Filtereinsatzes 6 den mit dem Rohraumeingang 4 kommunizierenden unteren Bereich des Innenraums des Gehäuses 1 auskleidet. An ihrem dem Rohraumeingang 4 zugewandten Ende ist die Schublade 14 offen, während sie an ihrem den Reinraumausgang 5 benachbarten Ende geschlossen ist.

Beim Filterbetrieb bildet also der im Innenraum der Schublade 14 gebildete, mit dem Rohraumeingang 4 kommunizierende Sackraum einen Teil des Rohraums 15, wobei am Rohraumeingang 4 eintretendes verschmutztes Fluid zumindest teilweise in den Innenraum der Schublade 14 eintritt und sodann die Filterwand 8 durchsetzt, so dass die Verschmutzungen zurückgehalten werden und im Reinraum 18, das heißt im Innenraum des Filtereinsatzes 6 gereinigtes Fluid vorliegt, welches nachfolgend durch den Reinraumausgang 5 austritt.

Durch die Schublade 14 wird bei einem Wechsel des Filtereinsatzes 6 sicher verhindert, dass von der Filterwand 8 zurückgehaltene Verschmutzungen in den Reinraumausgang 5 einrieseln können.

Um die Montage der Schublade 14 am Filtereinsatz 6 in möglichst einfacher Weise gewährleisten zu können, können an den Rändern der Seitenwangen der Schublade 14 und den Außenseiten der Bodenscheiben 7 schienenartige Führungsprofile angeordnet sein, so dass sich die Schublade 14 am Filtereinsatz 6 in die gewünschte Gebrauchslage einschieben lässt. In der Solllage können dann am dem Reinraumausgang 5 benachbarten Ende der Schublade angeordnete Rastelemente mit Gegenrastelementen an der Flanschplatte 10 zusammenwirken, so dass die Schublade 14 sicher in ihrer Solllage festgehalten wird.

Die Flanschplatte 10 hat also eine Doppelfunktion, indem sie einerseits für eine stabile Halterung des Filtereinsatzes 6 am Reinraumausgang 5 und andererseits für eine sichere Fixierung der Schublade 14 dient.

## Patentansprüche

1. Filteranordnung, insbesondere Luftfilteranordnung, mit einem einen Rohraumeingang (4) und einen Reinraumausgang (5) aufweisenden Gehäuse (1) und einem im Gehäuse (1) am Reinraumausgang (5) anbringbaren Filtereinsatz (6), dessen Filterwand (8) einen Reinraum im Innenraum des Filtereinsatzes (6) von einem Rohraum im Innenraum des Gehäuses (1) außerhalb des Filtereinsatzes (6) trennt,
**dadurch gekennzeichnet,**
**dass** am Filtereinsatz (6) für einen Bereich des Innenraums des Gehäuses (1) am Reinraumausgang (5) ein Auskleidungsteil (14) angeordnet ist, welches einen Auffangraum für von der Filterwand (8) nahe des Reinraumausganges (5) zurückgehaltenen Schmutz bildet.

2. Filteranordnung nach Anspruch 1,
**dadurch gekennzeichnet,**
**dass** die Auskleidung als auf den Filtereinsatz (6) aufschiebbare Schublade (14) ausgebildet ist.

3. Filteranordnung nach Anspruch 1,
**dadurch gekennzeichnet,**
**dass** das Auskleidungsteil (14) am dem Filtereinsatz (6) anklipsbar ist.

4. Filteranordnung nach Anspruch 1,
**dadurch gekennzeichnet,**
**dass** das Auskleidungsteil (14) unlösbar mit dem Filtereinsatz (6) verbunden ist.

5. Filteranordnung nach einem der Ansprüche 1 bis 4,
**dadurch gekennzeichnet,**
**dass** der Filtereinsatz (6) zwei im Wesentlichen zueinander parallele Bodenscheiben (7) aufweist, die an ihren einander gegenüberliegenden Randzonen durch eine zur Ebene der Bodenscheiben im Wesentlichen senkrechte Filterwand (8) verbunden sind, welche ihrerseits von einer an den Reinraumausgang (5) anschließbaren Öffnung (9) durchsetzt wird.

6. Filteranordnung nach Anspruch 5,
**dadurch gekennzeichnet,**
**dass** die Öffnung (9) in einer Flanschplatte (10) angeordnet ist, welche mit den Bodenscheiben (7) fest verbunden ist.

7. Filteranordnung nach einem der Ansprüche 1 bis 6,
**dadurch gekennzeichnet,**
**dass** die als Schublade (14) ausgebildete Auskleidung in Führungen an den Bodenscheiben (7) einschiebbar und an der Flanschplatte (10) verrastbar ist.

8. Filteranordnung nach Anspruch 7,
**dadurch gekennzeichnet,**
**dass** eine die Schublade (14) in deren Solllage nahe des Reinraumausganges (5) abschließende Querwand mit ihren dem Filtereinsatz (6) zugewandten Rand mit Gegenrastelementen an schubladenseitigen Rand der Flanschplatte (10) zur Fixierung der Schublade (14) zusammenwirkt.

9. Filtereinsatz für eine Filteranordnung gemäß einem der Ansprüche 1 bis 8,
**dadurch gekennzeichnet, dass** das Auskleidungsteil (14) als integraler oder lösbarer Bestandteil des Filtereinsatzes ausgebildet ist.

## Claims

1. A filter arrangement, in particular air filter arrangement, with a housing (1) having an untreated space inlet (4) and a clean space outlet (5) and a filter insert (6) which can be attached to the clean space outlet (5) in the housing (1), the filter wall (8) of which separates a clean space in the interior of the filter insert (6) from an untreated space outside the filter insert (6) in the interior of the housing (1), **characterised in that** a lining part (14) on the filter insert (6) for a region of the interior of the housing (1) at the clean space outlet (5) is arranged to the filter insert (6), which part forms a collection space for dirt retained by the filter wall (8) in the vicinity of the clean space outlet (5).

2. The filter arrangement according to Claim 1, **characterised in that** the lining is formed as a drawer (14) which can be pushed onto the filter insert (6).

3. The filter arrangement according to Claim 1, **characterised in that** the lining part (14) can be clipped to the filter insert (6).

4. The filter arrangement according to Claim 1, **characterised in that** the lining part (14) is connected non-detachably to the filter insert (6).

5. The filter arrangement according to one of Claims 1 to 4, **characterised in that** the filter insert (6) has two substantially parallel base discs (7), which are connected at their mutually opposite edge zones by a filter wall (8), which is substantially perpendicular to the plane of the base discs and for its part is penetrated by an opening (9) which can be connected to the clean space outlet (5).

6. The filter arrangement according to Claim 5, **characterised in that** the opening (9) is arranged in a flange plate (10), which is connected fixedly to the base discs (7).

7. The filter arrangement according to one of Claims 1 to 6, **characterised in that** the lining formed as a drawer (14) can be inserted into guides on the base discs (7) and can be latched on the flange plate (10).

8. The filter arrangement according to Claim 7, **characterised in that** a transverse wall which terminates the drawer (14) in its target position close to the clean space outlet (5) interacts using its edge facing the filter insert (6) with counter-latching element on the drawer-side edge of the flange plate (10) in order to fix the drawer (14).

9. A filter insert for a filter arrangement according to one of Claims 1 to 8, **characterised in that** the lining part (14) is formed as an integral or detachable component of the filter insert.

## Revendications

1. Dispositif de filtre, notamment dispositif de filtre à air, comportant un logement (1) présentant une entrée d'espace brut (4) et une sortie d'espace purifié (5), et une cartouche filtrante (6) pouvant être montée dans le logement (1) sur la sortie d'espace purifié (5), dont la paroi filtrante (8) sépare un espace purifié dans l'espace intérieur de la cartouche filtrante (6) d'un espace brut dans l'espace intérieur du logement (1) à l'extérieur de la cartouche filtrante (6),
**caractérisé en ce que**
sur la cartouche filtrante (6) pour une zone de l'espace intérieur du logement (1) sur la sortie d'espace purifié (5) une partie de revêtement (14) est disposée, qui forme un espace de captage des impuretés retenues par la paroi de filtre (8) à proximité de la sortie d'espace purifié (5).

2. Dispositif de filtre selon la revendication 1,
**caractérisé en ce que**
le revêtement est réalisé comme un tiroir (14) coulissant sur la cartouche filtrante (6).

3. Dispositif de filtre selon la revendication 1,
**caractérisé en ce que**
la partie de revêtement (14) peut être clipsée sur la cartouche filtrante (6).

4. Dispositif de filtre selon la revendication 1,
**caractérisé en ce que**
la partie de revêtement (14) est reliée de manière inamovible à la cartouche filtrante (6).

5. Dispositif de filtre selon une des revendications 1 à 4,
**caractérisé en ce que**
la cartouche filtrante (6) présente deux disques de fond (7) essentiellement parallèles les uns aux autres, qui sont reliées sur les zones de bords opposées par une paroi de filtre (8) essentiellement perpendiculaire à un plan des disques de fond, laquelle est traversée de son côté par une ouverture (9) pouvant se rattacher à la sortie d'espace purifié (5).

6. Dispositif de filtre selon la revendication 5,
**caractérisé en ce que**
l'ouverture (9) est disposée dans une plaque de bride (10), qui est reliée solidement avec les disques de fond (7).

7. Dispositif de filtre selon une des revendications 1 à 6,
**caractérisé en ce que**
le revêtement réalisé comme un tiroir (14) peut être coulissé dans des glissières sur les disques de fond (7) et peut être encliqueté sur la plaque de bride (10).

8. Dispositif de filtre selon la revendication 7,
**caractérisé en ce qu'**
une paroi transversale obturant le tiroir (14) dans sa position de consigne à proximité de la sortie d'espace purifié (5) coopère par son bord tourné vers la cartouche filtrante (6) avec des éléments d'encliquetage mutuel sur le bord du côté du tiroir de la plaque de bride (10) afin de fixer le tiroir (14).

9. Cartouche filtrante pour un dispositif de filtre selon une des revendications 1 à 8,
**caractérisée en ce que**
la partir de revêtement (14) est réalisée comme un composant amovible ou en un seul tenant de la cartouche filtrante.
